# EUROPEAN PATENT APPLICATION

(11) **EP 0 716 554 A2**
(43) Date of publication of application: **12.06.1996**
(21) Application number: 95203418.9
(22) Date of filing: 08.12.1995
(51) Int. Cl.: H04Q 7/20

(54) **Coupling means for establishing a coupling between at least one telecommunication device and at least one transmitter/receiver device, and also a method for coupling at least one telecommunication device and at least one transmitter/receiver device**

(30) Priority: 08.12.1994 NL 9402064
(71) Applicant: Koninklijke PTT Nederland N.V., NL-2509 CH The Hague (NL)
(72) Inventor: Taal, Kees Peter, NL-2551 MA Den-Haag (NL); Soors D'Ancona, Robbert Paul, NL-1275 CJ Huizen (NL)

(57) **Abstract**

Known coupling means establish a coupling between one transmitter/receiver device designed for a certain radio channel and one telephone set, after which a radio connection is created between the telephone set and a mobile station which is tuned to the certain radio channel. By extending the coupling means with selecting means, the possibility arises of both selecting from the telephone device, in response to dialling signals of a first type originating from said telephone device, one or more, or even all, of the various transmitter/receiver devices, and the possibility of selecting from the transmitter/receiver device, one of the various telephone sets, possibly associated with the public telephone network, in response to dialling signals of a second type originating from the mobile station.

## Description

### A Background of the invention

The invention relates to coupling means for establishing a coupling between at least one telecommunication device and at least one transmitter/receiver device for establishing a communication connection between the telecommunication device and a mobile station which can be coupled to the transmitter/receiver device in a wireless manner, with the telecommunication device being provided with first generating means for the generation of a dialling signal of a first type, and with the mobile station being provided with second generating means for the generation of a dialling signal of a second type.

Such a coupling device is generally known and establishes a coupling in a direct manner between a first telecommunication device, such as a first telephone set for example, and a first transmitter/receiver device, such as a first transmitter/receiver which is tuned to a fixed first radio channel, and, for example, further establishes a coupling in a direct manner between a second telecommunication device, such as for example a second telephone set, and a second transmitter/receiver device, such as a second transmitter/receiver which is tuned to a fixed second radio channel. A telecommunication device, that is, a telephone set, has at its disposal first generating means for the generation of dialling signals of a first type, for example a DTMF (Dual-Tone-Multi-Frequency) generator which generates DTMF signals, and a mobile station and a transmitter/receiver device each have at their disposal second generating means for the generation of dialling signals of a second type, such as a 5TVO (Vijf-Toon-Volgorde, that is, Five-Tone-Sequence) generator which generates 5TVO signals. The first telephone set which, via the first transmitter/receiver, must in a wireless manner come into contact with one of the mobile stations which are tuned to the first radio channel, generates DTMF signals which are converted by the coupling device into 5TVO signals for the identification of one of said mobile stations which are tuned to the first radio channel. The second telephone set which, via the second transmitter/receiver, must in a wireless manner come into contact with one of the mobile stations which are tuned to a second radio channel, generates DTMF signals which are converted by the coupling device into 5TVO signals for identification of one of said mobile stations which are tuned to the second radio channel. One of the mobile stations which are tuned to the first (second) radio channel and which, in a wireless manner, must come into contact with the coupling device via the first (second) transmitter/receiver device in order to further come into contact with the first (second) telecommunication device and/or further mobile stations, generates 5TVO signals for the purpose of communication with the coupling device and possible identification of one of the further mobile stations.

Such coupling means have as a disadvantage, among others, that they have a limited application area.

### B Summary of the invention

Among others, the purpose of the invention is to provide coupling means of the kind mentioned in the preamble, which have a broader application area.

The coupling means according to the invention are characterised in that the coupling means have been provided with selecting means for selecting at least one device which is to be coupled to the coupling, in response to a dialling signal of at least one type.

By selecting a device which is to be coupled to the coupling (a transmitter/receiver device or a telecommunication device respectively) with the selecting means, in response to a dialling signal of at least one certain type (the first or second type respectively), coupling devices are obtained which have a broader application area, since, from one side of the coupling means to the other side, as well as from the other side of the coupling means to the one side, more possible applications are created.

The invention is based, among others, on the insight that dialling signals of the first type as well as dialling signals of the second type can be detected, and that further mutually different dialling signals of one certain type can be detected, and that, in response to such detection, various switching functions can be realised which enlarge the application area considerably.

Thus, the problem of the limited application area of the coupling means is solved by detecting mutually different dialling signals of the same type and dialling signals of different types, and performing selections on this basis.

It should be observed that it is known from US 4.639.552 that a transmitting telephone set is only connected to a receiving telephone set after a certain code has been verified. Said certain code is generated in this case on the basis of a dialling signal of a first type (DTMF signals), said dialling signal of course further being used to select a certain telephone set. Not known from this is the establishment in a wireless manner via transmitter/receiver devices of a coupling between telecommunication devices based on the first type of dialling signals, such as telephone sets, and mobile stations based on dialling signals of the second type. Neither is the invention known from US 5.151.972, in which an apparatus is described for connecting a terminal to telephone lines in an automatic manner.

A first embodiment of the coupling means according to the invention is characterised in that the device which is to be selected at least comprises one of the different telecommunication devices, with the dialling signal of the certain type comprising a dialling signal of the second type, and with the selecting means being provided with converting means for the conversion of a dialling signal of the second type into a dialling signal of the first type.

In this case, a telecommunication device is selected from the mobile station on the basis of a dialling signal of the second type. Via the converting means, said dialling signal of the second type is converted into a dialling signal of the first type for supplying to the telecommunication device.

A second embodiment of the coupling means according to the invention is characterised in that the converting means are provided with detecting means for the detection of a dialling signal of the second type, and are provided with third generating means which are coupled to the detecting means for the generation of a dialling signal of the first type, originating from a number of previously stored dialling signals of the first type and in dependence of the dialling signal of the second type which is to be detected.

In this case, the dialling signal of the second type is detected via the detecting means, and the dialling signal of the first type is generated, in response to the detected dialling signal of the second type, via the third generating means. The third generating means, which include the number of previously stored dialling signals of the first type, are then formed, for example, by a memory table in which, possibly in an encoded form, dialling signals of the second type are present in a first column, and in which, possibly in an encoded form, dialling signals of the first type are present in a second column. An alternative version of said third generating means could convert, in a direct manner, one portion of a dialling signal of the second type into one portion of a dialling signal of the first type, and again could be formed by a memory table in which, possibly in an encoded form, elementary portions of dialling signals of the second type are present in a first column, and in which, possibly in an encoded form, elementary portions of dialling signals of the first type are present in a second column.

A third embodiment of the coupling means according to the invention is characterised in that the dialling signal of the certain type comprises a dialling signal of the first type, in which case, the device which is to be selected contains at least one of the various transmitter/receiver devices.

In this case, a transmitter/receiver device is selected from the telecommunication device on the basis of the dialling signal. Thus a selection is made of mobile stations which are tuned to a certain radio channel.

A fourth embodiment of the coupling means according to the invention is characterised in that the selecting means are provided with further converting means for the conversion of a dialling signal of the first type into a dialling signal of the second type.

In this case, said dialling signal of the first type is converted via the further converting means into a dialling signal of the second type for supplying to the transmitter/receiver device.

A fifth embodiment of the coupling means according to the invention is characterised in that the further converting means are provided with further detecting means for the detection of a dialling signal of the first type, and are provided with further third generating means, coupled to the further detecting means, for the generation of a dialling signal of the second type in dependence of the dialling signal of the first type which is to be detected, with one portion of a dialling signal of the first type corresponding in a direct manner with one portion of a dialling signal of the second type.

In this case, the dialling signal of the first type is detected via the further detecting means, and the dialling signal of the second type is generated via the further third generating means, in response to the detected dialling signal. The further third generating means, which convert, in a direct manner, one portion of a dialling signal of a first type into one portion of a dialling signal of the second type, are then, for example, formed by a memory table in which, possibly in an encoded form, elementary portions of dialling signals of the first type are present in a first column, and in which, possibly in an encoded form, elementary portions of dialling signals of the second type are present in a second column. An alternative version of said further third generating means could include a number of previously stored dialling signals of the second type, and could then be formed by a memory table in which, possibly in an encoded form, dialling signals of the first type are present in a first column, and in which, possibly in an encoded form, dialling signals of the second type are present in a second column.

The invention further relates to a method for coupling at least one telecommunication device and at least one transmitter/receiver device for establishing a communication connection between the telecommunication device and a mobile station which is coupled, in a wireless manner, to the transmitter/receiver device, with the first generating means associated with the telecommunication device generating a dialling signal of a first type, and with second generating means associated with the mobile station generating a dialling signal of a second type.

The method according to the invention is characterised in that the method comprises the steps of
- receiving at least one dialling signal of at least one certain type, and
- selecting at least one device to be coupled, in response to the dialling signal which is to be received.

A first embodiment of the method according to the invention is characterised in that the device which is to be selected comprises at least one of the various telecommunication devices, with the dialling signal of the certain type comprising a dialling signal of the second type, and with the step of selecting comprising a step of converting a dialling signal of the second type into a dialling signal of the first type.

A second embodiment of the method according to the invention is characterised in that the step of converting a dialling signal of the second type into a dialling signal of the first type comprises the steps of
- detecting a dialling signal of the second type, and
- generating a dialling signal of the first type originating from a number of previously stored dialling signals of the first type and in dependence of the dialling signal of the second type which is to be detected.

A third embodiment of the method according to the invention is characterised in that the dialling signal of the certain type comprises a dialling signal of the first type, with the device to be selected comprising at least one of the various transmitter/receiver devices.

A fourth embodiment of the method according to the invention is characterised in that the step of selecting comprises a step of converting a dialling signal of the first type into a dialling signal of the second type.

A fifth embodiment of the method according to the invention is characterised in that the step of converting a dialling signal of the first type into a dialling signal of the second type comprises the steps of
- detecting a dialling signal of the first type, and
- generating a dialling signal of the second type, in dependence of the dialling signal of the first type which is to be detected, with one portion of a dialling signal of the first type corresponding, in a direct manner, to one portion of a dialling signal of the second type.

### C References

■ US 4.639.552
■ US 5.151.972
■ NL 9402064 (Dutch priority patent application)

All references are deemed to be included in this patent application.

### D Exemplary embodiment

The invention will be further explained on the basis of an exemplary embodiment shown in the figures. In this regard:

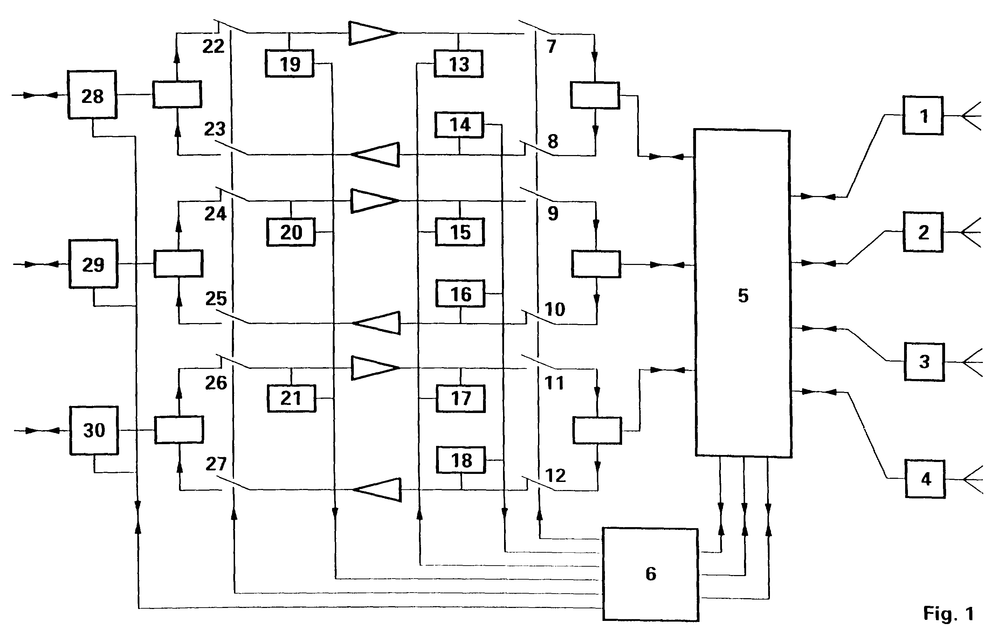

- Fig. 1: shows coupling means according to the invention for establishing a coupling between at least one telecommunication device and at least one transmitter/receiver device.

The coupling means (shown in Fig. 1) include four transmitter/receiver devices 1, 2, 3 and 4, also called base posts, said base posts 1, 2, 3 and 4 each having at their disposal an own antenna for wireless communication with mobile stations (not shown in Fig. 1), such as for example radiotelephones or walkie-talkies. The base posts 1, 2, 3 and 4 respectively is furthermore coupled to a first, second, third and fourth in/output respectively on a first side of a switching matrix 5, which is connected to a processor 6 via a first control coupling, a second control coupling and a third control coupling. On a second side of switching matrix 5, a first, second and third in/output respectively is present which is coupled to an in/output of a first, second and third forked switch respectively. One input of the first forked switch is connected to an output of a fourth forked switch via a switch 7, which at rest is in a non-conducting state, and a first amplifier and a switch 22, which at rest is in a conducting state. An output of said first forked switch is connected to an input of the fourth forked switch via a switch 8, which at rest is in a conducting state, and a second amplifier and a switch 23, which at rest is in a non-conducting state. An in/output of said fourth forked switch is connected to telephone circuit 28, which via a first telephone line is connected to a telephone switch (not shown in Fig. 1). An input of the second forked switch is connected to an output of a fifth forked switch via a switch 9, which at rest is in a non-conducting state, and a third amplifier and a switch 24, which at rest is in a conducting state. An output of said second forked switch is connected to an input of the fifth forked switch via a switch 10, which at rest is in a conducting state, and a fourth amplifier and a switch 25, which at rest is in a non-conducting state. An in/output of said fifth forked switch is connected to telephone circuit 29 which via a second telephone line is connected to a telephone switch (not shown in Fig. 1). An input of the third forked switch is connected to an output of a sixth forked switch via a switch 11, which at rest is in a non-conducting state, and a fifth amplifier and a switch 26, which at rest is in a conducting state. An output of said third forked switch is connected to an input of the sixth forked switch via a switch 12, which at rest is in a conducting state, and a sixth amplifier and a switch 27, which at rest is in a non-conducting state. An in/output of said sixth forked switch is connected to telephone circuit 30 which via a third telephone line is connected to a telephone switch (not shown in Fig. 1).

An output of a generator 13 for the generation of 5TVO (Vijf-Toon-Volgorde, that is, Five-Tone-Sequence) signals is connected to a connection situated between the first amplifier and switch 7. An output of a generator 15 for the generation of 5TVO (Vijf-Toon-Volgorde, that is, Five-Tone-Sequence) signals is connected to a connection situated between the third amplifier and switch 9. An output of a generator 17 for the generation of 5TVO (Vijf-Toon-Volgorde, that is, Five-Tone-Sequence) signals is connected to a connection situated between the fifth amplifier and switch 11. An input of a detector 14 for the detection of 5TVO (Vijf-Toon-Volgorde, that is, Five-Tone-Sequence) signals is connected to a connection situated between the second amplifier and switch 8. An input of a detector 16 for the detection of 5TVO (Vijf-Toon-Volgorde, that is, Five-Tone-Sequence) signals is connected to a connection situated between the fourth amplifier and switch 10. An input of a detector 18 for the detection of 5TVO (Vijf-Toon-Volgorde, that is, Five-Tone-Sequence) signals is connected to a connection situated between the sixth amplifier and switch 12. An input of a detector 19 for the detection of DTMF (Dual-Tone-Multi-Frequency) signals is connected to a connection situated between the first amplifier and switch 22. An input of a detector 20 for the detection of DTMF (Dual-Tone-Multi-Frequency) signals is connected to a connection situated between the third amplifier and switch 24. An input of a detector 21 for the detection of DTMF (Dual-Tone-Multi-Frequency) signals is connected to a connection situated between the fifth amplifier and switch 26.

Switches 7, 8, 9, 10, 11 and 12 are connected to processor 6 via a fourth control coupling, detectors 14, 16 and 18 are connected to processor 6 via a fifth control coupling, generators 13, 15 and 17 are connected to processor 6 via a sixth control coupling, detectors 19, 20 and 21 are connected to processor 6 via a seventh control coupling, switches 22, 23, 24, 25, 26 and 27 are connected to processor 6 via an eighth control coupling, and telephone circuits 28, 29 and 30 are connected to processor 6 via a ninth control coupling.

The operation of the coupling means according to the invention (shown in Fig. 1) if a coupling is to be established from a telecommunication device, such as for example a telephone set coupled to a telecommunication switch (not shown in Fig. 1) to at least one base post, for establishing a communication connection from the telephone set to the radiotelephone which, in a wireless manner, is coupled to the base post, is as follows. Via the telephone set, which has at its disposal first generating means for the generation of a dialling signal of a first type, such as for example a generator for the generation of DTMF (Dual-Tone-Multi-Frequency) signals, a first DTMF signal is generated, such as for example a telephone number, in response to which a communication connection is established from the telephone set via a telephone switch (not shown in Fig. 1) to, for example, telephone circuit 28. Said telephone circuit 28 notifies processor 6 via the ninth control coupling that said communication connection has been established, after which processor 6, via the first control coupling, prevents a call which may originate from one of the base posts from being conducted to the first forked switch via the first in/output on the second side of switching matrix 5. Via the telephone set a second DTMF signal is subsequently generated, such as for example a two-digit number followed by a hash, which is detected by detector 19 via the telephone switch (not shown in Fig. 1) and via telephone circuit 28 and via the fourth forked switch and via switch 22. Detector 19 converts the second DTMF signal into a digital signal and feeds the latter via the seventh control coupling to processor 6, which, in response to this, brings switch 7 into a conducting state and switch 8 into a non-conducting state via the fourth control coupling on the one hand and, on the other, connects the first in/output situated on the second side of switching matrix 5 through to, for example, the second in/output situated on the first side of switching matrix 5 via, for example, the first control coupling. Via the communication connection established between the telephone set and base post 2, contact in a wireless manner by way of speech can be subsequently attempted with at least one radiotelephone.

It is also possible that via the telephone set a more extensive second DTMF signal is generated, such as for example a two-digit number followed by a hash, followed by a three-digit number followed by a hash, which is detected by detector 19 via the telephone switch (not shown in Fig. 1) and via telephone circuit 28 and via the fourth forked switch and via switch 22. Detector 19 converts the more extensive second DTMF signal into a more extensive digital signal and feeds said signal, via the seventh control coupling, to processor 6, which on the one hand, in response to a first portion of said more extensive digital signal, brings switch 7 into the conducting state and switch 8 into the non-conducting state via the fourth control coupling, and on the other hand connects the first in/output situated on the second side of the switching matrix 5 through to, for example, the second in/output situated on the first side of switching matrix 5 via, for example, the first control coupling. In response to a second portion of said more extensive digital signal, processor 6 furthermore generates a digital signal destined for generator 13 which is fed to generator 13 via de sixth control coupling. In response to this, generator 13 generates a 5TVO (Vijf-Toon-Volgorde, that is, Five-Tone-Sequence) signal which is fed to base post 2 via switch 7 and via the first forked switch and via switching matrix 5, after which establishing contact is attempted in a wireless manner with a radiotelephone characterised by the 5TVO signal.

The operation of the coupling means according to the invention (shown in Fig. 1) if a coupling is to be established from a base post to a telecommunication device, such as for example to a telephone set (not shown in Fig. 1) coupled to a telecommunication switch, for establishing a communication connection from the radiotelephone which, in a wireless manner, can be coupled to the base post to the telephone set, is as follows. Via the radiotelephone, which has at its disposal second generating means for the generation of 5TVO (Vijf-Toon-Volgorde, that is, Five-Tone-Sequence) signals, a first 5TVO signal is generated, in response to which a communication connection is established from the radiotelephone to, for example, base post 3. Said base post 3 notifies processor 6 via the third in/output situated on the first side of switching matrix 5 and via switching matrix 5 and via, for example, the third control coupling, that said communication connection has been established, after which processor 6 via, for example, the third control coupling, connects the third in/output, situated on the first side of the switching matrix 5, through to, for example, the second in/output situated on the second side of switching matrix 5. This interconnection is established by processor 6 only after processor 6 has found a so-called free telephone line between on of the telephone circuits 28, 29 and 30 on the one hand, and a telephone exchange (not shown in Fig. 1) on the other hand. Hereby a communication connection is present between the radiotelephone and the second forked switch. Via the radiotelephone, a 5TVO signal is subsequently generated, which is detected by detector 16 via base post 3 and via switching matrix 5 and via the second forked switch and via switch 10. Detector 16 converts the second 5TVO signal into a digital signal and feeds the latter via the fifth control coupling to processor 6, which, in response to this, brings switch 25 into a conducting state and switch 24 into a non-conducting state via the eighth control coupling on the one hand and, on the other, feeds a digital signal into telephone circuit 29 via the ninth control coupling, in response to which telephone circuit 29 generates a DTMF signal, such as for example a telephone number. On this basis, the already present communication connection from the radiotelephone is extended, via base post 3 and via the second forked switch and via switch 10 via the fourth amplifier and via switch 25 up to the fifth forked switch, from telephone circuit 29 via the telecommunication exchange (not shown in Fig. 1) to the telephone set.

The telephone set is provided with first generating means for the generation of a dialling signal of a first type, said first generating means for example being identical to the generators which are present in the telephone circuits 28, 29 and 30 for the generation of DTMF signals. The radiotelephone is provided with second generating means for the generation of a dialling signal of a second type, said second generating means for example being identical to the generators 13, 15 and 17 for the generation of 5TVO signals.

The coupling means (shown in Fig. 1) are therefore provided with selecting means for selecting at least one of the devices which are to be coupled to the coupling means, in response to a dialling signal of at least one certain type. If this device which is to be selected and coupled to the coupling means is a telephone set, then the dialling signal of the certain type is a dialling signal of the second type, that is, a 5TVO signal, and the selecting means are formed by switching matrix 5, processor 6, detectors 14, 16 and 18 which form detecting means for the detection of dialling signals of a second type, and telephone circuits 28, 29 and 30 which form third generating means coupled to the detecting means for the generation of a dialling signal of the first type in dependence of the dialling signal of the second type which is to be detected, in which case, if this dialling signal of a first type originates from a number of previously stored dialling signals of the first type, processor 6 for example has at its disposal a memory table containing digital signals in a first column which, via telephone circuits 28, 29 and 30, lead to dialling signals of a first type, and digital signals in a second column corresponding to said digital signals which, via detectors 14, 16 and 18, are derived from dialling signals of a second type. In this case, processor 6, detectors 14, 16 and 18, and telephone circuits 28, 29 and 30 form converting means for the conversion of a dialling signal of the second type into a dialling signal of the first type. If, on the other hand, the device which is to be selected en coupled to the coupling means is a radiotelephone, then the dialling signal of the certain type is a dialling signal of the first type, that is, a DTMF signal, and the selecting means are formed by switching matrix 5, processor 6, detectors 19, 20 and 21 which form further detecting means for the detection of dialling signals of a first type, and generators 13, 15 and 17 which form the further third generating means coupled to further detecting means for the generation of a dialling signal of the second type in dependence of the dialling signal of the first type which is to be detected, in which case, if one portion of a dialling signal of a first type corresponds, in a direct manner, to one portion of a dialling signal of the second type, processor 6 for example has at its disposal a further memory table containing digital numbers in a first column which each correspond to a portion of a dialling signal of a first type, and, in a second column, digital numbers corresponding to said digital numbers which each correspond to a portion of a dialling signal of a second type. In this case, processor 6, detectors 19, 20 and 21 and generators 13, 15 and 17 form further converting means for the conversion of a dialling signal of the first type into a dialling signal of the second type.

If the telephone circuits 28, 29 and 30 are coupled, via a digital signalling network, to a telecommunication switch (not shown in Fig. 1), the dialling signals of the first type will already be completely digital signals, as a result of which detectors 19, 20 and 21 and telephone circuits 28, 29 and 30 will obtain a more digital character. If the telephone circuits 28, 29 and 30 are coupled to a telephone switch (not shown in Fig. 1) via completely digital telecommunication connections, the speech signals will be completely digital signals, as a result of which, for example, a digital/analogue converter (D/A converter) is required in the coupling means (shown in Fig. 1), including base posts, or in the radiotelephones (not shown in Fig. 1). Further, the dialling signals of the second type could be completely digital signals, as a result of which, for example, detectors 14, 16 and 18 will obtain a more digital character. In general, speech/data detectors will be incorporated in detectors 19, 20 and 21 and in detectors 14, 16 and 18, so that, in the case of speech/data originating from the one side, the other side will temporarily not have the possibility of transmitting speech/data in the direction of the one side.

## Claims

1. Coupling means for establishing a coupling between at least one telecommunication device and at least one transmitter/receiver device for establishing a communication connection between the telecommunication device and a mobile station which, in a wireless manner, can be coupled to the transmitter/receiver device, with the telecommunication device being provided with first generating means for the generation of a dialling signal of a first type, and with the mobile station being provided with second generating means for the generation of a dialling signal of a second type, characterised in that the coupling means are provided with selecting means for selecting at least one device to be coupled to the coupling, in response to a dialling signal of at least one certain type.

2. Coupling means according to Claim 1, characterised in that the device which is to be selected comprises at least one of the various telecommunication devices, with the dialling signal of the certain type comprising a dialling signal of the second type, and with the selecting means being provided with converting means for the conversion of a dialling signal of the second type into a dialling signal of the first type.

3. Coupling means according to Claim 2, characterised in that the converting means are provided with detecting means for the detection of a dialling signal of the second type, and are provided with third generating means, coupled to the detecting means, for the generation of a dialling signal of the first type, originating from a number of previously stored dialling signals of the first type and in dependence of the dialling signal of the second type which is to be detected.

4. Coupling means according to Claims 1, 2 or 3, characterised in that the dialling signal of the certain type comprises a dialling signal of the first type, with the device which is to be selected comprising at least one of the various transmitter/receiver devices.

5. Coupling means according to Claim 4, characterised in that the selecting means are provided with further converting means for the conversion of a dialling signal of the first type into a dialling signal of the second type.

6. Coupling means according to Claim 5, characterised in that the further converting means are provided with further detecting means for the detection of a dialling signal of the first type, and are provided with the further third generating means, coupled to the further detecting means, for the generation of a dialling signal of the second type in dependence of the dialling signal of the first type to be detected, with one portion of a dialling signal of the first type corresponding, in a direct manner, to one portion of a dialling signal of the second type.

7. A method for coupling at least one telecommunication device and at least one transmitter/receiver device for establishing a communication connection between the telecommunication device and a mobile station which, in a wireless manner, is to be coupled to the transmitter/receiver device, with the first generating means, associated with the telecommunication device, generating a dialling signal of a first type, and with second generating means, associated with the mobile station, generating a dialling signal of a second type, characterised in that the method comprises the steps of
- receiving at least one dialling signal of at least one certain type, and
- selecting at least one device to be coupled, in response to the dialling signal which is to be received.

8. A method according to Claim 7, characterised in that the device which is to be selected comprises at least one of the various telecommunication devices, with the dialling signal of the certain type comprising a dialling signal of the second type, and with the step of selecting comprising a step of the conversion of a dialling signal of the second type into a dialling signal of the first type.

9. A method according to Claim 8, characterised in that the step of converting a dialling signal of the second type into a dialling signal of the first type comprises the steps of
- detecting a dialling signal of the second type, and
- generating a dialling signal of the first type in dependence of the dialling signal of the second type which is to be detected,
originating from a number of previously stored dialling signals of the first type.

10. A method according to Claim 7, 8 or 9, characterised in that the dialling signal of the certain type comprises a dialling signal of the first type, with the device which is to be selected comprising at least one of the various transmitter/receiver devices.

11. A method according to Claim 10, characterised in that the step of selecting comprises a step of the conversion of a dialling signal of the first type into a dialling signal of the second type.

12. A method according to Claim 11, characterised in that the step of converting a dialling signal of the first type into a dialling signal of the second type comprises the steps of
- detecting a dialling signal of the first type, and
- generating a dialling signal of the second type in dependence of the dialling signal of the first type which is to be detected, with one portion of a dialling signal of the first type corresponding, in a direct manner, to one portion of a dialling signal of the second type.
